# FASCICULE DE BREVET EUROPEEN

(11) **EP 0 743 626 B1**
(45) Date de publication et mention de la délivrance du brevet: **06.02.2002**
(21) Numéro de dépôt: 96201264.7
(22) Date de dépôt: 08.05.1996
(51) Int. Cl.: G08G 1/0968, G10L 13/00

(54) **Appareil d'information routière muni d'un générateur de synthèse vocale perfectionné**
Verkehrsinformationsgerät mit verbessertem Sprachsynthesegenerator
Traffic information apparatus with improved speech synthesis generator

(30) Priorité: 17.05.1995 FR 9505863
(43) Date de publication de la demande: 20.11.1996
(73) Titulaire: Siemens Aktiengesellschaft, 80333 München (DE)
(72) Inventeur: Zeegers, Donald, Société Civile S.P.I.D., 75008 Paris (FR); Zorer, Jean-Louis, Société Civile S.P.I.D., 75008 Paris (FR)
(74) Mandataire: Richter, Jürgen

(56) Documents cités:
- EP-A- 0 373 386
- EP-A- 0 454 572
- EP-A- 0 495 252
- US-A- 3 928 722

## Description

La présente invention concerne un appareil d'information routière muni
- d'un générateur de synthèse vocale qui engendre des messages parlés sous forme de signaux audio de type analogique,
- de moyens pour acquérir des codes représentant chacun un élément de message,
- d'une mémoire permanente dans laquelle sont enregistrées des données représentant des éléments de message, en correspondance à chaque fois avec un des dits codes,
- d'un module de génération de messages qui est muni de moyens pour interpréter les dits codes de façon à trouver dans la mémoire les éléments de messages correspondants, et fournir au générateur de synthèse vocale une séquence de symboles représentant les éléments de message.

Un tel appareil est par exemple un récepteur autoradio destiné à recevoir par voie hertzienne des signaux dits RDS/TMC qui comportent des messages d'information routière, ou bien un appareil de guidage routier, dit aussi appareil de navigation, qui acquiert des messages entre autres à partir d'un disque compact. Un tel appareil délivre des messages d'information sur la circulation, ou destinés au guidage d'un véhicule, par synthèse vocale et en les inscrivant éventuellement sur un écran.

La présente invention concerne aussi un module de génération de messages d'information routière destiné à être associé à un générateur de synthèse vocale qui engendre des messages parlés sous forme de signaux audio de type analogique, muni
- de moyens pour acquérir des codes représentant chacun un élément de message,
- d'un microcontrôleur qui comporte ou est associé à une mémoire permanente dans laquelle sont enregistrées des données représentant des éléments de message, en correspondance à chaque fois avec un des dits codes, et qui est muni de moyens pour interpréter les dits codes de façon à trouver dans la mémoire les éléments de messages correspondants, et fournir au générateur de synthèse vocale une séquence de symboles représentant les éléments de message.

La présente invention concerne encore un générateur de synthèse vocale destiné à être utilisé dans un appareil d'information routière, muni
- de moyens pour acquérir des données représentant chacune un élément de message,
- d'une mémoire permanente dans laquelle sont enregistrées, sous forme d'un échantillonnage numérique, des signaux audio de type analogique, en correspondance à chaque fois avec une des dites données,
- d'un microcontrôleur qui est muni de moyens pour traiter les dites données de façon à trouver dans la mémoire les signaux audio correspondants.

Un générateur de synthèse vocale est connu du document EP-A-0 059 880. Ce document explique que des messages parlés sont définis par des éléments, appelés allophones, représentant chacun la transcription phonétique d'un élément de vocabulaire, ces allophones étant amenés au synthétiseur de parole.

Le document EP-A-0 454 572 décrit une méthode permettant de générer des messages sonores. Cette méthode utilise une base de données sonores dans laquelle sont préalablement enregistrés des mots élémentaires. La méthode de génération des messages sonores permet de reconstituer des phrases types d'annonces sonores à partir de ces mots élémentaires, sur instruction d'un opérateur.

Un objet de l'invention est de simplifier la réalisation globale de l'ensemble module de génération de messages plus générateur de synthèse vocale.

A cet effet, l'appareil d'information routière selon l'invention est remarquable en ce que
- la mémoire permanente contient des données représentant des éléments de messages qui sont d'au moins deux types différents l'un de l'autre, avec pour chacune de ces données une indication de son type,
- le module de génération de messages est muni de moyens
   - pour tirer de la mémoire, à partir d'un code représentant un élément de message, les données en question, qui sont d'un type ou d'un autre,
   - pour placer, avant chaque donnée, un caractère de reconnaissance de type correspondant, le caractère de reconnaissance déterminant une méthode pour générer un signal analogique,
   - et pour les transmettre au générateur de synthèse vocale,
- et le générateur de synthèse vocale est muni de moyens pour reconnaître et pour transformer en signaux audio de type analogique les différents types de données correspondants conformément aux méthodes définies par leurs caractères de reconnaissance respectifs.

Ainsi on peut simplifier considérablement le logiciel du module de génération de messages sans compliquer beaucoup celui du générateur de synthèse vocale.

Un module de génération de messages d'information routière selon l'invention est remarquable en ce que, sa mémoire permanente contenant des données représentant des éléments de messages qui sont d'au moins deux types différents l'un de l'autre, avec pour chacune de ces données une indication de son type, son microcontrôleur est muni de moyens
- pour tirer de la mémoire, à partir d'un code représentant un élément de message, les données en question, qui sont d'un type ou d'un autre,
- pour placer, avant chaque donnée, un caractère de reconnaissance de type correspondant, le caractère de reconnaissance déterminant une méthode pour générer un signal analogique,
- et pour les transmettre au générateur de synthèse vocale.

Une donnée de l'un des types étant constituée d'un nombre qui désigne un symbole représentant la transcription phonétique d'un élément de message, le module de génération de messages est avantageusement muni de moyens pour traiter une telle donnée, et le générateur de synthèse vocale est muni de moyens pour reconnaître et transformer en signaux audio de type analogique la quantité ou la désignation en question.

Une donnée d'un autre type étant constituée d'un nombre qui désigne une séquence pré-enregistrée dans une mémoire du générateur de synthèse vocale, séquence correspondant à une partie de phrase, le module de génération de messages est également muni avantageusement de moyens pour traiter une telle donnée, et le générateur de synthèse vocale est muni de moyens pour reconnaître et transformer en signaux audio de type analogique la séquence en question.

Une donnée d'encore un autre type étant constituée d'un nombre désignant une quantité ou la désignation d'un axe routier, le module de génération de messages est en outre avantageusement muni de moyens pour traiter une telle donnée, et le générateur de synthèse vocale est muni de moyens pour reconnaître et transformer en signaux audio de type analogique la quantité ou la désignation en question.

La mémoire de l'appareil d'information routière contenant à la fois des données de trois types différents, le module de génération de messages est de préférence muni de moyens pour traiter des données de trois types différents, et de moyens pour transmettre les données des différents types les unes à la suite des autres dans un seul transfert de données d'un bus série, et le générateur de synthèse vocale est muni de moyens pour reconnaître et transformer en signaux audio de type analogique au moins trois types de données différents.

Cela permet d'utiliser un port série des microcontrôleurs, et de limiter le nombre de connexions internes à l'appareil.

Ces aspects de l'invention ainsi que d'autres aspects plus détaillés apparaîtront plus clairement grâce à la description suivante d'un mode de réalisation constituant un exemple non limitatif.

La figure 1 représente schématiquement un récepteur autoradio équipé de l'invention.

La figure 2 représente plus en détail le générateur de synthèse vocale et ses connections avec le reste de l'appareil.

La figure 3 est un exemple d'une suite de séquences de symboles produite par le microcontrôleur à l'intention du générateur de synthèse vocale et comportant des symboles des trois types mélangés.

La description qui suit concerne un autoradio destiné à recevoir et exploiter des signaux dits RDS/TMC. Il est clair que l'homme du métier saurait adapter cette description au cas d'un appareil de navigation ou de routage, par exemple d'un genre connu sous le nom "CARIN" ou "CARMINAT" ou "SOCRATES", d'autant que la partie qui met en oeuvre l'invention peut être semblable dans un autoradio et dans un appareil de navigation.

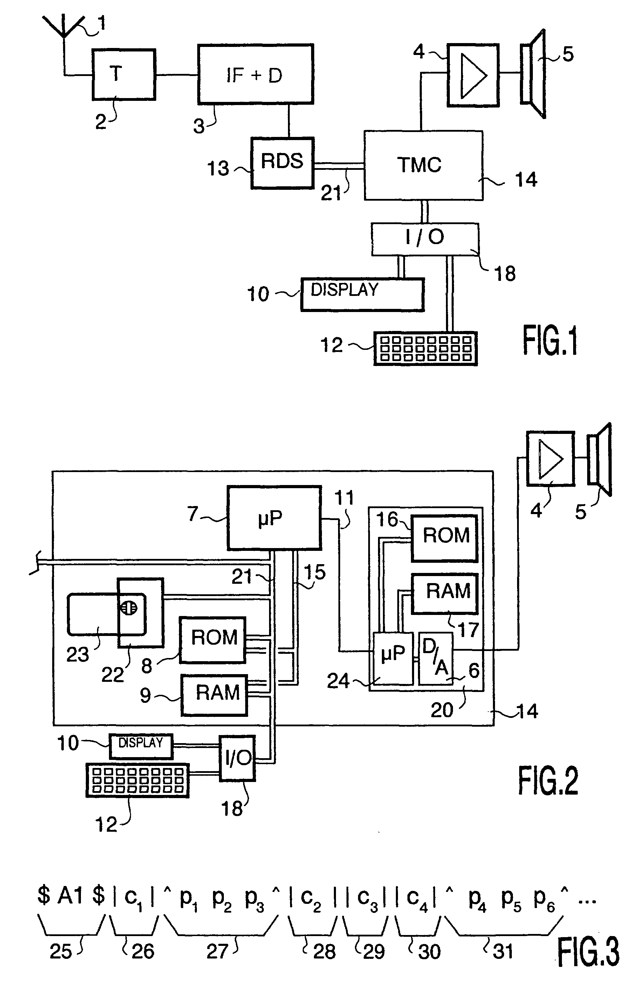

Le récepteur de la figure 1 comporte, à partir d'une antenne 1, un dispositif 2 ("tuner") contenant un circuit de syntonisation et un circuit de changement de fréquence, suivi d'un dispositif 3 contenant un amplificateur à fréquence intermédiaire et un démodulateur.

Dans le procédé dit RDS ("Radio Data System"), une sous-porteuse FM est modulée par des signaux numériques de données, utiles à la réception des différents émetteurs d'une même chaîne. Pour traiter ces signaux, le récepteur comporte un décodeur 13 de messages RDS.

Dans le cas du procédé connu dit "TMC" (Traffic Message Channel"), des messages d'information sur la circulation sont incorporés dans certains champs numériques des signaux RDS.

Pour traiter les messages TMC, le récepteur comporte un module 14, auquel les données RDS du décodeur 13 sont amenées par un bus 21, pour être analysées et éventuellement mémorisées. Pour permettre de délivrer des messages sous forme vocale, ce module 14 est aussi relié à un système amplificateur audio 4 suivi d'un haut-parleur 5. Il est relié aussi à un dispositif d'interface entrée/sortie 18 relié à un clavier de commande 12 et à un écran d'affichage 10, par exemple à cristaux liquides.

Les messages TMC standard sont constitués de plusieurs champs de données numériques, reçus dans les données RDS, et qui désignent des éléments de message par un nombre :
- un 1^{er} champ, de 11 bits, contient un nombre qui désigne un élément de message (mot ou groupe de mots) décrivant un événement,
- un 2^{e} champ, de 16 bits, contient un nombre qui désigne un élément de message définissant la localisation concernée par l'événement en question,
- un 3^{e} champ, de 3 bits, contient une donnée décrivant une extension de la localisation concernée,
- un 4^{e} champ, de 1 bit, décrivant le sens du trajet concerné,
- un 5^{e} champ, de 3 bits, donnant la durée de validité du message,
- un 6^{e} champ, de 1 bit, indiquant s'il est recommandé ou non de prendre une déviation.

Le contenu de chacun des champs doit être traité de façon à exprimer en clair ce dont il s'agit. Pour cela est prévue une mémoire permanente, dans laquelle sont stockées des informations permettant de générer les éléments de message correspondants d'un message à afficher, à des adresses correspondant aux différents contenus possibles de chaque champ, ce qui permet de retrouver les informations à partir du contenu d'un champ.

Par exemple, le 1^{er} champ, qui comporte 11 bits, est associé à une mémoire qui peut contenir en clair 2¹¹ éléments de message, chacun étant trouvé à l'adresse définie par le contenu du champ. Ces éléments de message disent par exemple "bouchon", "travaux", "accident", etc.

Le 2^{e} champ, qui comporte 16 bits, est associé à une mémoire qui peut contenir en clair jusqu'à 2¹⁶ éléments de message, qui comprennent des données complètes sur notamment des noms de localisations, leur type, la région à laquelle ils appartiennent, les points suivant et précédent, etc. Ces éléments de message sont par exemple "le Bourget" ou "Lille", etc. Plusieurs champs de données sont prévus pour une même localisation, si elle fait partie de plusieurs axes : par exemple "Compiègne", situé sur l'axe Paris-Lille mais aussi sur l'axe Rouen-Reims, apparaît séparément pour chacun de ces axes. Pour chaque pays concerné sont définies plusieurs bases de données différentes de 2¹⁶ éléments chacune, à choisir selon l'application. Le pays concerné est indiqué dans un code dit PI, faisant partie des données RDS, et la référence de la base de données choisie est indiquée dans un "message système" qui est émis de temps en temps par chaque émetteur RDS/TMC.

Dans le 3^{e} champ, différents types d'extensions sont définis. On entend par extension le fait que l'événement considéré s'étend par exemple jusqu'à la localisation suivante, ou sur deux kilomètres, etc.

Dans le 4^{e} champ, un bit 0 signifie par exemple "sens Paris → Lille", alors qu'un bit 1 signifierait "sens Lille → Paris" (c'est le contenu du champ 2 qui indique qu'on est sur une liaison entre Paris et Lille, mais le sens n'y est pas indiqué).

Un ensemble de ces champs permet donc par exemple de définir un message tel que "autoroute A1 vers Lille, bouchon sur deux kilomètres à la hauteur du Bourget".

Sur la figure 2, le module 14 comprend un microcontrôleur 7, par exemple de type 68000, qui génère des signaux de contrôle et traite les signaux qui sortent de différents dispositifs 8, 9, 18, 22, auxquels il est relié par un bus d'adresses 15 et par un bus de données 21. Le module 14 comprend plusieurs mémoires :
- une mémoire volatile 9 dite "RAM", pour le stockage de données valides à un instant donné,
- une mémoire permanente 8 pour le stockage de données concernant des éléments de messages, données fixées une fois pour toutes en correspondance avec certains champs, et d'instructions indiquant comment traiter les éléments de messages selon leur teneur, comme expliqué plus loin,
- et une mémoire 22, 23 constituée d'un lecteur 22 de carte à mémoire et d'une carte à mémoire amovible 23, par exemple de type PCMCIA, dans laquelle sont stockées plus spécialement les données correspondant au 2^{e} champ des données TMC c'est-à-dire, entre autres, la séquence de phonèmes qui correspond à chacun des noms de localisations prévus pour un pays donné (pour mémoire, un phonème est une unité sonore d'un langage). Ces données sont donc prévues pour un groupe d'usagers et/ou une région donnés.

Le microcontrôleur 7 sélectionne et prépare des données en fonction du contenu du message TMC. Lorsqu'un message TMC arrive, le microcontrôleur reçoit de la part du décodeur RDS 13 les contenus des champs, et les inscrit dans la mémoire 9. Pour l'émission vocale de ce message, il trouve dans la mémoire 8, en correspondance avec le nombre contenu dans un champ, une adresse qui renvoie à un sous-programme conçu pour traiter l'élément de message en question, c'est-à-dire pour engendrer une suite de symboles destinés à un générateur de synthèse vocale 20.

Une suite de symboles arrivant au générateur de synthèse vocale comporte des séquences successives de symboles placées bout à bout, avec de chaque côté d'une séquence d'un type donné, un caractère de reconnaissance de type. Il est prévu, dans le présent exemple, trois types différents de séquences de symboles.

Une séquence de symboles d'un premier type représente phonétiquement les éléments d'un mot à énoncer.

Une séquence de symboles d'un second type est constitué d'un nombre désignant une quantité ou la désignation d'un axe routier.

Une séquence de symboles d'un troisième type est constitué d'un nombre qui désigne une séquence pré-enregistrée dans la mémoire du générateur de synthèse vocale et correspondant à une partie de phrase.

Ainsi la suite de symboles représentée par la figure 3 comprend bout à bout :
- une séquence de symboles 25 du second type, qui commence et finit par le caractère $, et désigne l'autoroute A1,
- une séquence de symboles 26 du troisième type, qui commence et finit par le caractère ¦, et qui comprend un seul symbole c₁ renvoyant à une séquence pré-enregistrée dans une mémoire permanente du générateur de synthèse vocale, correspondant à la génération du mot "vers" dans le haut-parleur,
- une séquence de symboles 27 du premier type, qui commence et finit par le caractère ^, et qui comprend les éléments phonétiques p₁, p₂, p₃, définissant la prononciation du nom de localisation "Lille",
- une séquence de symboles 28 du troisième type, qui commence et finit par le caractère ¦, et qui comprend un seul symbole c₂ renvoyant à une séquence pré-enregistrée dans une mémoire permanente du générateur de synthèse vocale, correspondant à la génération du mot "bouchon",
- une séquence de symboles 29 du troisième type, qui commence et finit par le caractère ¦, et qui comprend un seul symbole c₃ renvoyant à une séquence pré-enregistrée dans une mémoire permanente du générateur de synthèse vocale, correspondant à la génération des mots "sur 2 kilomètres",
- une séquence de symboles 30 du troisième type, qui commence et finit par le caractère ¦, et qui comprend un seul symbole c₄ renvoyant à une séquence pré-enregistrée dans une mémoire permanente du générateur de synthèse vocale, correspondant à la génération des mots "à la hauteur",
- une séquence de symboles 31 du premier type, qui commence et finit par le caractère ^, et qui comprend les éléments phonétiques p₄, p₅, p₆, définissant la prononciation du nom de localisation "du Bourget".

Ce message est donc : "autoroute A1 vers Lille, bouchon sur deux kilomètres à la hauteur du Bourget".

Dans cet exemple les symboles représentent un contenu d'une unité de base de mémoire, par exemple c₁, représenté par 16 bits, pourrait valoir 327, et non pas les caractères "c" et "1". Les trois symboles p₁, p₂, p₃ représentent, par exemple par 8 bits chacun, trois valeurs successives.

Le microcontrôleur 7 est relié par un bus série 11, par exemple de type I2C, au générateur de synthèse vocale 20, pour lui faire parvenir des séquences de symboles telles que décrites ci-dessus. Le bus 11 utilise donc les procédures connues d'un bus I2C (procédure de départ et de fin, entre autres), et le message I2C qu'il transmet est constitué d'une suite de symboles tels qu'exemplifiée par la figure 3.

Le générateur de synthèse vocale 20 engendre des signaux analogiques destinés à l'amplificateur audio 4 suivi du haut-parleur 5. Il comprend entre autres :
- une mémoire volatile 17 dite "RAM", entre autres pour le stockage transitoire des symboles venant du microcontrôleur 7,
- et une mémoire permanente 16 par exemple de type dit "ROM", dans laquelle sont stockées différentes données utiles au générateur de synthèse vocale.
- son propre micro-contrôleur 24, par exemple de type 8051 qui, entre autres, à partir des séquences de symboles reçus via le bus 11, détermine la teneur du message à produire et, pour obtenir en fin de compte un signal analogique destiné à l'amplificateur audio, produit des échantillons successifs d'amplitude de ce signal analogique, à une cadence d'échantillonnage de par exemple 8kHz.
- Un convertisseur numérique-analogique 6 qui reçoit les dits échantillons un par un et engendre le signal analogique pour l'amplificateur audio 4.

Lorsqu'un message arrive sur le bus 11, ce message commence par un caractère de reconnaissance de type. Ce caractère de reconnaissance de type désigne une partie de la mémoire 16 dans laquelle se trouve un logiciel pour interpréter les symboles qui suivent le caractère de reconnaissance de type. Par exemple le caractère de reconnaissance de type $ aiguille sur un logiciel qui sait exploiter le symbole "A1". Lorsqu'il rencontre un caractère de reconnaissance de type, le microcontrôleur lève un drapeau signifiant qu'il a affaire à un type donné, drapeau qu'il baissera lorsque le même caractère de reconnaissance de type sera rencontré à nouveau, le symbole qui suit dans le message étant donc alors à nouveau un caractère de reconnaissance de type.

Dans le cas du caractère de reconnaissance de type ^, les symboles qui suivent sont des descripteurs de phonèmes. Chacun de ces symboles renvoie à une adresse où le microcontrôleur trouve des indications lui permettant de créer de façon connue les échantillons successifs d'amplitude du signal analogique à produire. A chacun des symboles correspond un seul phonème.

Dans le cas du caractère de reconnaissance de type ¦, un seul symbole suit, c'est un nombre désignant une phrase ou au moins un élément de phrase complet. Là encore, cette donnée renvoie à une adresse où le microcontrôleur trouve directement les échantillons successifs d'amplitude du signal analogique à produire. Par exemple la donnée c₂ conduit à l'énoncé du mot "bouchon", la donnée c₃ à celui des mots "sur deux kilomètres", etc. A chacun des symboles correspondent plusieurs phonèmes.

Dans le cas du caractère de reconnaissance de type$, les données suivantes désignent un nombre ou un axe routier. Le logiciel d'interprétation analyse le contenu complet des données, par exemple dans le cas des données "A1", l'élément A puis l'élément 1. Il détermine alors successivement une adresse où il trouve directement les échantillons successifs d'amplitude du signal analogique correspondant à l'énoncé "autoroute A" (c'est-à-dire ce qui est désigné par la donnée "A") puis une adresse où il trouve ceux correspondant à l'énoncé "un" (c'est-à-dire ce qui est désigné par la donnée "1"). Le logiciel d'interprétation est spécifique car il comporte un module d'analyse, connu en soi, pour décomposer un nombre en différents éléments, selon les règles de l'arithmétique. Par exemple la séquence de symboles $223$ ne se résout pas en l'énoncé "deux", "deux", "trois", mais conduit à énoncer "deux", "cents", "vingt", "trois".

## Revendications

1. Appareil d'information routière muni
- d'un générateur de synthèse vocale (20) qui engendre des messages parlés sous forme de signaux audio de type analogique,
- de moyens (7, 9) pour acquérir des codes (TMC) représentant chacun un élément de message,
- d'une mémoire permanente (8,23) dans laquelle sont enregistrées des données représentant des éléments de message, en correspondance à chaque fois avec un des dits codes (TMC),
- d'un module générateur de messages qui est muni de moyens (7) pour interpréter les dits codes (TMC) de façon à trouver dans la mémoire (8, 23) les éléments de messages correspondants, et fournir au générateur de synthèse vocale (20) une séquence de symboles représentant les éléments de message,
**caractérisé en ce que**
- la mémoire permanente (8, 23) contient des données représentant des éléments de messages qui sont d'au moins deux types différents l'un de l'autre, avec pour chacune de ces données une indication de son type,
- le module générateur de messages est muni de moyens
- pour tirer de la mémoire (8,23), à partir d'un code (TMC) représentant un élément de message, les données en question, qui sont d'un type ou d'un autre,
- pour placer, avant chaque donnée, un caractère de reconnaissance de type correspondant, le caractère de reconnaissance déterminant une méthode pour générer un signal analogique,
- et pour les transmettre au générateur de synthèse vocale (20),
- et le générateur de synthèse vocale (20) est muni de moyens pour reconnaître et pour transformer en signaux audio de type analogique les différents types de données correspondants conformément aux méthodes définies par leurs caractères de reconnaissance respectifs.

2. Appareil d'information routière selon la revendication 1, **caractérisé en ce qu'**une donnée de l'un des types est constituée d'un nombre qui désigne un symbole représentant la transcription phonétique d'un élément de message, et le générateur de synthèse vocale (20) est muni de moyens pour reconnaître et transformer en signaux audio de type analogique la quantité ou la désignation en question.

3. Appareil d'information routière selon la revendication 1, **caractérisé en ce qu'**une donnée de l'un des types est constituée d'un nombre qui désigne une séquence pré-enregistrée dans une mémoire (16) du générateur de synthèse vocale (20), séquence correspondant à une partie de phrase, et le générateur de synthèse vocale (20) est muni de moyens pour reconnaître et transformer en signaux audio de type analogique la séquence en question.

4. Appareil d'information routière selon la revendication 1, **caractérisé en ce qu'**une donnée de l'un des types est constituée d'un nombre désignant une quantité ou la désignation d'un axe routier, et le générateur de synthèse vocale (20) est muni de moyens pour reconnaître et transformer en signaux audio de type analogique la quantité ou la désignation en question.

5. Appareil d'information routière selon la revendication 1, **caractérisé en ce que** la mémoire contient à la fois des données de trois types différents et le générateur de synthèse vocale (20) est muni de moyens pour reconnaître et transformer en signaux audio de type analogique au moins trois types de données différents.

6. Appareil d'information routière selon la revendication 1, **caractérisé en ce qu'**il est muni de moyens pour transmettre des données des différents types, constituant un message complet pour le générateur de synthèse vocale (20), mélangées les unes à la suite des autres dans un seul transfert de données d'un bus série (11).

7. Appareil d'information routière selon la revendication 6, **caractérisé en ce que** le bus série (11) est de type I2C.

8. Appareil d'information routière selon la revendication 6, **caractérisé en ce que** le module générateur de messages est muni de moyens pour placer, après une donnée de l'un des types, un caractère de reconnaissance de type identique à celui qui la précède.

9. Module de génération de messages d'information routière destiné à être associé à un générateur de synthèse vocale (20) qui engendre des messages parlés sous forme de signaux audio de type analogique, muni
- de moyens (7, 9) pour acquérir des codes (TMC) représentant chacun un élément de message,
- d'un microcontrôleur (7) qui comporte ou est associé à une mémoire permanente (8,23) dans laquelle sont enregistrées des données représentant des éléments de message, en correspondance à chaque fois avec un des dits codes (TMC), et qui est muni de moyens pour interpréter les dits codes (TMC) de façon à trouver dans la mémoire (8,23) les éléments de messages correspondants, et fournir au générateur de synthèse vocale (20) une séquence de symboles représentant les éléments de message,
**caractérisé en ce que**, la mémoire permanente (8,23) contenant des données représentant des éléments de messages qui sont d'au moins deux types différents l'un de l'autre, avec pour chacune de ces données une indication de son type, le microcontrôleur (7) est muni de moyens
- pour tirer de la mémoire (8, 23), à partir d'un code (TMC) représentant un élément de message, les données en question, qui sont d'un type ou d'un autre,
- pour placer, avant chaque donnée, un caractère de reconnaissance de type correspondant, le caractère de reconnaissance déterminant une méthode pour générer un signal analogique,
- et pour les transmettre au générateur de synthèse vocale (20).

10. Module de génération de messages d'information routière selon la revendication 9, **caractérisé en ce qu'**il est muni de moyens pour traiter une donnée constituée d'un nombre qui désigne un symbole représentant la transcription phonétique d'un élément de message.

11. Module de génération de messages d'information routière selon la revendication 9, **caractérisé en ce qu'**il est muni de moyens pour traiter une donnée constituée d'un nombre qui désigne une séquence pré-enregistrée dans une mémoire (16) du générateur de synthèse vocale (20), séquence correspondant à une partie de phrase.

12. Module de génération de messages d'information routière selon la revendication 9, **caractérisé en ce qu'**il est muni de moyens pour traiter une donnée constituée d'un nombre désignant une quantité ou la désignation d'un axe routier.

13. Module de génération de messages d'information routière selon la revendication 9, **caractérisé en ce qu'**il est muni de moyens pour traiter des données de trois types différents.

14. Module de génération de messages d'information routière selon la revendication 9, **caractérisé en ce qu'**il est muni de moyens pour transmettre des données de différents types les unes à la suite des autres dans un seul transfert de données d'un bus série (11).

15. Module de génération de messages d'information routière selon la revendication 14, **caractérisé en ce qu'**il est muni de moyens pour placer, après une donnée de l'un des types, un caractère de reconnaissance de type identique à celui qui la précède.

16. Générateur de synthèse vocale (20) destiné à être utilisé dans un appareil d'information routière, muni
- de moyens pour acquérir (17, 24) des données représentant chacune un élément de message,
- d'une mémoire permanente (16) dans laquelle sont enregistrées, sous forme d'un échantillonnage numérique, des signaux audio de type analogique, en correspondance à chaque fois avec une des dites données,
- d'un microcontrôleur (24) qui est muni de moyens pour traiter les dites données de façon à trouver dans la mémoire (16) les signaux audio correspondants,
**caractérisé en ce que**
- le microcontrôleur (24) est muni de moyens
- pour reconnaître plusieurs types de données différents, un type de données étant associé à un caractère de reconnaissance,
- pour traiter ces données selon une méthode déterminée par le caractère de reconnaissance qui leur est associé, et trouver en mémoire les signaux audio correspondants,

17. Générateur de synthèse vocale (20) selon la revendication 16, **caractérisé en ce qu'**il est muni de moyens pour reconnaître et traiter une donnée constituée d'un nombre qui désigne un symbole représentant la transcription phonétique d'un élément de message.

18. Générateur de synthèse vocale (20) selon la revendication 16, **caractérisé en ce qu'**il est muni de moyens pour reconnaître et traiter une donnée constituée d'un nombre qui désigne une séquence pré-enregistrée dans une mémoire (16), séquence correspondant à une partie de phrase.

19. Générateur de synthèse vocale (20) selon la revendication 16, **caractérisé en ce qu'**il est muni de moyens pour reconnaître et traiter une donnée constituée d'un nombre désignant une quantité ou la désignation d'un axe routier.

20. Générateur de synthèse vocale (20) selon la revendication 16, **caractérisé en ce qu'**il est muni de moyens pour reconnaître et traiter au moins trois types différents de données.

21. Générateur de synthèse vocale (20) selon la revendication 16, **caractérisé en ce qu'**il est muni de moyens pour recevoir des données des différents types, constituant un message complet, mélangées les unes à la suite des autres dans un seul transfert de données d'un bus série (11).

22. Méthode de génération de messages parlés sous forme de signaux audio de type analogique à partir d'une mémoire permanente (8, 23) contenant des données représentant des éléments de messages en correspondance à chaque fois avec un code (TMC) et qui sont d'au moins deux types différents l'un de l'autre, avec pour chacune de ces données une indication de son type, la méthode comprenant :
- une étape d'acquisition pour acquérir des codes (TMC) représentant chacun un élément de message,
- une étape de formation de messages
- pour tirer de la mémoire (8,23), à partir d'un code (TMC) représentant un élément de message, les données en question, qui sont d'un type ou d'un autre,
- pour placer, avant chaque donnée, un caractère de reconnaissance de type correspondant, le caractère de reconnaissance déterminant une méthode pour générer un signal analogique,
- et pour les transmettre à une étape de génération de synthèse vocale,
- et l'étape de génération de synthèse vocale pour reconnaître et pour transformer en signaux audio de type analogique les différents types de données correspondants conformément aux méthodes définies par leurs caractères de reconnaissance respectifs.

## Claims

1. Traffic information apparatus furnished
- with a speech synthesis generator (20) which produces spoken messages in the form of audio signals of analogue type,
- with means (7, 9) for acquiring codes (TMC) each representing a message element,
- with a permanent memory (8, 23) in which are recorded data representing message elements, in correspondence on each occasion with one of the said codes (TMC),
- with a message generator module which is furnished with means (7) for interpreting the said codes (TMC) so as to find the corresponding message elements in the memory (8, 23) and provide the speech synthesis generator (20) with a sequence of symbols representing the message elements,
**characterized in that**
- the permanent memory (8, 23) contains data representing message elements which are of at least two mutually different types, with for each of these data an indication of its type,
- the message generator module is furnished with means
- for fetching from the memory (8, 23), on the basis of a code (TMC) representing a message element, the data in question, which are of one type or another,
- for placing, in front of each data item, a recognition character of corresponding type, the recognition character determining a method for generating an analogue signal,
- and for transmitting them to the speech synthesis generator (20),
- and the speech synthesis generator (20) is furnished with means for recognizing and for transforming into audio signals of analogue type the various corresponding data types in accordance with the methods defined by their respective recognition characters.

2. Traffic information apparatus according to Claim 1, **characterized in that** a data item of one of the types consists of a number which designates a symbol representing the phonetic transcription of a message element, and the speech synthesis generator (20) is furnished with means for recognizing and transforming into audio signals of analogue type the quantity or the designation in question.

3. Traffic information apparatus according to Claim 1, **characterized in that** a data item of one of the types consists of a number which designates a sequence prerecorded in a memory (16) of the speech synthesis generator (20), sequence corresponding to a part of a phrase, and the speech synthesis generator (20) is furnished with means for recognizing and transforming into audio signals of analogue type the sequence in question.

4. Traffic information apparatus according to Claim 1, **characterized in that** a data item of one of the types consists of a number designating a quantity or the designation of a major route, and the speech synthesis generator (20) is furnished with means for recognizing and transforming into audio signals of analogue type the quantity or the designation in question.

5. Traffic information apparatus according to Claim 1, **characterized in that** the memory simultaneously contains data of three different types and the speech synthesis generator (20) is furnished with means for recognizing and transforming into audio signals of analogue type at least three different data types.

6. Traffic information apparatus according to Claim 1, **characterized in that** it is furnished with means for transmitting data of the various types, which constitute a complete message for the speech synthesis generator (20) and are mixed one after the other in a single data transfer of a serial bus (11).

7. Traffic information apparatus according to Claim 6, **characterized in that** the serial bus (11) is of I2C type.

8. Traffic information apparatus according to Claim 6, **characterized in that** the message generator module is furnished with means for placing, behind a data item of one of the types, a recognition character of identical type to that which precedes the data item.

9. Module for generating traffic information messages, which is intended to be associated with a speech synthesis generator (20) which produces spoken messages in the form of audio signals of analogue type, furnished
- with means (7, 9) for acquiring codes (TMC) each representing a message element,
- with a microcontroller (7) which comprises or is associated with a permanent memory (8, 23) in which are recorded data representing message elements, in correspondence on each occasion with one of the said codes (TMC),
and which is furnished with means for interpreting the said codes (TMC) so as to find the corresponding message elements in the memory (8, 23) and provide the speech synthesis generator (20) with a sequence of symbols representing the message elements,
**characterized in that** the permanent memory (8, 23) containing data representing message elements which are of at least two mutually different types, with for each of these data an indication of its type,
the microcontroller (7) is furnished with means
- for fetching from the memory (8, 23), on the basis of a code (TMC) representing a message element, the data in question, which are of one type or another,
- for placing, in front of each data item, a recognition character of corresponding type, the recognition character determining a method for generating an analogue signal,
- and for transmitting them to the speech synthesis generator (20).

10. Module for generating traffic information messages according to Claim 9, **characterized in that** it is furnished with means for processing a data item consisting of a number which designates a symbol representing the phonetic transcription of a message element.

11. Module for generating traffic information messages according to Claim 9, **characterized in that** it is furnished with means for processing a data item consisting of a number which designates a sequence prerecorded in a memory (16) of the speech synthesis generator (20), sequence corresponding to a part of a phrase.

12. Module for generating traffic information messages according to Claim 9, **characterized in that** it is furnished with means for processing a data item consisting of a number designating a quantity or the designation of a major route.

13. Module for generating traffic information messages according to Claim 9, **characterized in that** it is furnished with means for processing data of three different types.

14. Module for generating traffic information messages according to Claim 9, **characterized in that** it is furnished with means for transmitting data of various types one after another in a single data transfer of a serial bus (11).

15. Module for generating traffic information messages according to Claim 14, **characterized in that** it is furnished with means for placing, behind a data item of one of the types, a recognition character of identical type to that which precedes the data item.

16. Speech synthesis generator (20) intended for use in a traffic information apparatus, furnished
- with means for acquiring (17, 24) data each representing a message element,
- with a permanent memory (16) in which are recorded, in the form of a digital sampling, audio signals of analogue type, in correspondence on each occasion with one of the said data,
- with a microcontroller (24) which is furnished with means for processing the said data so as to find the corresponding audio signals in the memory (16),
characacterized in that
- the microcontroller (24) is furnished with means
- for recognizing several different data types, a data type being associated with a recognition character,
- for processing these data according to a method determined by the recognition character which is associated with them, and finding the corresponding audio signals in memory.

17. Speech synthesis generator (20) according to Claim 16, **characterized in that** it is furnished with means for recognizing and processing a data item consisting of a number which designates a symbol representing the phonetic transcription of a message element.

18. Speech synthesis generator (20) according to Claim 16, **characterized in that** it is furnished with means for recognizing and processing a data item consisting of a number which designates a sequence prerecorded in a memory (16), sequence corresponding to a part of a phrase.

19. Speech synthesis generator (20) according to Claim 16, **characterized in that** it is furnished with means for recognizing and processing a data item consisting of a number designating a quantity or the designation of a major route.

20. Speech synthesis generator (20) according to Claim 16, **characterized in that** it is furnished with means for recognizing and processing at least three different types of data.

21. Speech synthesis generator (20) according to Claim 16, **characterized in that** it is furnished with means for receiving data of the various types, which constitute a complete message and are mixed one after the other in a single data transfer of a serial bus (11).

22. Method of generating spoken messages in the form of audio signals of analogue type on the basis of a permanent memory (8, 23) containing data representing message elements in correspondence on each occasion with a code (TMC) and which are of at least two mutually different types, with for each of these data an indication of its type, the method comprising:
- an acquisition step for acquiring codes (TMC) each representing a message element,
- a message formation step
- for fetching from the memory (8, 23), on the basis of a code (TMC) representing a message element, the data in question, which are of one type or another,
- for placing, in front of each data item, a recognition character of corresponding type, the recognition character determining a method for generating an analogue signal,
- and for transmitting them to a speech synthesis generation step,
- and the speech synthesis generation step for recognizing and transforming into audio signals of analogue type the various corresponding data types in accordance with the methods defined by their respective recognition characters.

## Patentansprüche

1. Verkehrsinformationsgerät mit:
- einem Sprachsynthesegenerator (20), der gesprochene Meldungen in Form von Audiosignalen analoger Art erzeugt,
- Mitteln (7, 9) zum Erlangen von Codes (TMC), die jeweils ein Meldungselement darstellen,
- einem Festspeicher (8, 23), in dem jeweils in Entsprechung zu einem der Codes (TMC) Meldungselemente darstellende Daten abgespeichert sind,
- einem Meldungsgeneratormodul, das mit Mitteln (7) versehen ist, um die Codes (TMC) zu interpretieren, so daß in dem Speicher (8, 23) die entsprechenden Meldungselemente gefunden werden, und um dem Sprachsynthesegenerator (20) eine Sequenz von die Meldungselemente darstellenden Symbolen zu liefern,
**dadurch gekennzeichnet, daß**
- der Festspeicher (8, 23) Meldungselemente darstellende Daten enthält, die von zumindest zwei voneinander verschiedenen Arten sind, mit einer Angabe über ihre Art für jede dieser Daten,
- das Meldungsgeneratormodul mit Mitteln versehen ist,
- um auf der Basis eines ein Meldungselement darstellenden Codes (TMC) aus dem Speicher (8, 23) die betreffenden Daten zu entnehmen, die von einer Art oder einer anderen sind,
- um vor jede der Daten ein Erkennungszeichen für die entsprechende Art zu setzen, wobei das Erkennungszeichen ein Verfahren zum Erzeugen eines Analogsignals festlegt,
- und um sie zum Sprachsynthesegenerator (20) zu übertragen,
- und daß der Sprachsynthesegenerator (20) mit Mitteln versehen ist, um die entsprechenden verschiedenen Arten von Daten zu erkennen und gemäß den durch ihre jeweiligen Erkennungszeichen definierten Verfahren in Audiosignale analoger Art umzuwandeln.

2. Verkehrsinformationsgerät gemäß Anspruch 1, **dadurch gekennzeichnet, daß** eine Art der Daten aus einer Zahl besteht, die ein Symbol bezeichnet, das die phonetische Transkription eines Meldungselements darstellt, und daß der Sprachsynthesegenerator (20) mit Mitteln versehen ist, um die betreffende Größe oder Bezeichnung zu erkennen und in ein Audiosignal analoger Art umzuwandeln.

3. Verkehrsinformationsgerät gemäß Anspruch 1, **dadurch gekennzeichnet, daß** eine Art der Daten aus einer Zahl besteht, die eine in einem Speicher (16) des Sprachsynthesegenerators (20) zuvor abgespeicherte Sequenz bezeichnet, die einem Satzteil entspricht, und daß der Sprachsynthesegenerator (20) mit Mitteln versehen ist, um die betreffende Sequenz zu erkennen und in ein Audiosignal analoger Art umzuwandeln.

4. Verkehrsinformationsgerät gemäß Anspruch 1, **dadurch gekennzeichnet, daß** eine Art der Daten aus einer Zahl besteht, die eine Größe oder die Bezeichnung einer Verkehrsachse bezeichnet, und daß der Sprachsynthesegenerator (20) mit Mitteln versehen ist, um die betreffende Größe oder Bezeichnung zu erkennen und in ein Audiosignal analoger Art umzuwandeln.

5. Verkehrsinformationsgerät gemäß Anspruch 1, **dadurch gekennzeichnet, daß** der Speicher gleichzeitig Daten dreier verschiedener Arten enthält und daß der Sprachsynthesegenerator (20) mit Mitteln versehen ist, um zumindest drei verschiedene Arten von Daten zu erkennen und in Audiosignale analoger Art umzuwandeln.

6. Verkehrsinformationsgerät gemäß Anspruch 1, **dadurch gekennzeichnet, daß** es mit Mitteln versehen ist, um eine vollständige Meldung für den Sprachsynthesegenerator (20) bildende Daten verschiedener Arten zu übertragen, die in einer einzigen Datenübertragung eines seriellen Busses (11) aufeinanderfolgend vermengt sind.

7. Verkehrsinformationsgerät gemäß Anspruch 6, **dadurch gekennzeichnet, daß** der serielle Bus (11) vom Typ I2C ist.

8. Verkehrsinformationsgerät gemäß Anspruch 6, **dadurch gekennzeichnet, daß** das Meldungsgeneratormodul mit Mitteln versehen ist, um nach einer Art der Daten ein Erkennungszeichen für die Art zu setzen, das identisch zu demjenigen ist, das ihr vorangeht.

9. Modul zur Generierung von Verkehrsinformationsmeldungen, das dazu bestimmt ist, mit einem Sprachsynthesegenerator (20) verbunden zu werden, der gesprochene Meldungen in Form von Audiosignalen analoger Art erzeugt, mit
- Mitteln (7, 9) zum Erlangen von Codes (TMC), die jeweils ein Meldungselement darstellen,
- einem Mikrokontroller (7), der einen Festspeicher (8, 23) aufweist oder damit verknüpft ist, in dem jeweils in Entsprechung zu einem der Codes (TMC) Meldungselemente darstellende Daten abgespeichert sind, und der mit Mitteln versehen ist, um die Codes (TMC) zu interpretieren, so daß in dem Speicher (8, 23) die entsprechenden Meldungselemente gefunden werden, und um dem Sprachsynthesegenerator (20) eine Sequenz von Symbolen zu liefern, die die Meldungselemente darstellen,
**dadurch gekennzeichnet, daß** der Festspeicher (8, 23) Meldungselemente darstellende Daten enthält, die von zumindest zwei voneinander verschiedenen Arten sind, mit einer Angabe über ihre Art für jede dieser Daten, der Mikrokontroller (7) mit Mitteln versehen ist,
- um auf der Basis eines ein Meldungselement darstellenden Codes (TMC) aus dem Speicher (8, 23) die betreffenden Daten zu entnehmen, die von einer Art oder einer anderen sind,
- um vor jede der Daten ein Erkennungszeichen für die entsprechende Art zu setzen, wobei das Erkennungszeichen ein Verfahren zum Erzeugen eines Analogsignals festlegt,
- und um sie zum Sprachsynthesegenerator (20) zu übertragen.

10. Modul zur Generierung von Verkehrsinformationsmeldungen gemäß Anspruch 9, **dadurch gekennzeichnet, daß** es mit Mitteln versehen ist, um Daten zu verarbeiten, die von einer Zahl gebildet werden, die ein Symbol bezeichnet, das die phonetische Transkription eines Meldungselements darstellt.

11. Modul zur Generierung von Verkehrsinformationsmeldungen gemäß Anspruch 9, **dadurch gekennzeichnet, daß** es mit Mitteln versehen ist, um Daten zu verarbeiten, die von einer Zahl gebildet werden, die eine in einem Speicher (16) des Sprachsynthesegenerators (20) vorab abgespeicherte Sequenz bezeichnet, die einem Satzteil entspricht.

12. Modul zur Generierung von Verkehrsinformationsmeldungen gemäß Anspruch 9, **dadurch gekennzeichnet, daß** es mit Mitteln versehen ist, um Daten zu verarbeiten, die von einer Zahl gebildet werden, die eine Größe oder die Bezeichnung einer Verkehrsachse bezeichnet.

13. Modul zur Generierung von Verkehrsinformationsmeldungen gemäß Anspruch 9, **dadurch gekennzeichnet, daß** es mit Mitteln versehen ist, um Daten dreier verschiedener Arten zu verarbeiten.

14. Modul zur Generierung von Verkehrsinformationsmeldungen gemäß Anspruch 9, **dadurch gekennzeichnet, daß** es mit Mitteln versehen ist, um Daten verschiedener Arten aufeinanderfolgend in einer einzigen Datenübertragung eines seriellen Busses (11) zu übertragen.

15. Modul zur Generierung von Verkehrsinformationsmeldungen gemäß Anspruch 14, **dadurch gekennzeichnet, daß** es mit Mitteln versehen ist, um nach einer Art der Daten ein Erkennungszeichen für die Art zu setzen, das identisch zu demjenigen ist, das ihr vorangeht.

16. Sprachsynthesegenerator (20), der dazu bestimmt ist, in einem Verkehrsinformationsgerät verwendet zu werden, mit:
- Mitteln (17, 24) zum Erlangen von Daten, die jeweils ein Meldungselement darstellen,
- einem Festspeicher (16), in dem jeweils in Entsprechung zu einer der Daten Audiosignale analoger Art in Form eines digitalen Samples abgespeichert sind,
- einem Mikrokontroller (24), der mit Mitteln versehen ist, um die Daten zu verarbeiten, so daß in dem Speicher (16) die entsprechenden Audiosignale gefunden werden,
**dadurch gekennzeichnet, daß**
- der Mikrokontroller (24) mit Mitteln versehen ist,
- um mehrere verschiedene Arten von Daten zu erkennen, wobei eine Art von Daten mit einem Erkennungszeichen verknüpft ist,
- um diese Daten gemäß einem Verfahren zu verarbeiten, das durch das Erkennungszeichen festgelegt ist, das mit ihnen verknüpft ist, und um im Speicher die entsprechenden Audiosignale zu finden.

17. Sprachsynthesegenerator (20) gemäß Anspruch 16, **dadurch gekennzeichnet, daß** er mit Mitteln versehen ist, um Daten zu erkennen und zu verarbeiten, die von einer Zahl gebildet werden, die ein Symbol bezeichnet, das die phonetische Transkription eines Meldungselements darstellt.

18. Sprachsynthesegenerator (20) gemäß Anspruch 16, **dadurch gekennzeichnet, daß** er mit Mitteln versehen ist, um Daten zu verarbeiten, die von einer Zahl gebildet werden, die eine in einem Speicher (16) vorab abgespeicherte Sequenz bezeichnet, die einem Satzteil entspricht.

19. Sprachsynthesegenerator (20) gemäß Anspruch 16, **dadurch gekennzeichnet, daß** er mit Mitteln versehen ist, um Daten zu verarbeiten, die von einer Zahl gebildet werden, die eine Größe oder die Bezeichnung einer Verkehrsachse bezeichnet.

20. Sprachsynthesegenerator (20) gemäß Anspruch 16, **dadurch gekennzeichnet, daß** er mit Mitteln versehen ist, um zumindest drei verschiedene Arten von Daten zu erkennen und zu verarbeiten.

21. Sprachsynthesegenerator (20) gemäß Anspruch 16, **dadurch gekennzeichnet, daß** er mit Mitteln versehen ist, um eine vollständige Meldung bildende Daten verschiedener Arten zu empfangen, die in einer einzigen Datenübertragung eines seriellen Busses (11) aufeinanderfolgend vermengt sind.

22. Verfahren zur Generierung von gesprochenen Meldungen in Form von Audiosignalen analoger Art auf der Basis eines Festspeichers (8, 23), der Daten enthält, die jeweils in Entsprechung zu einem Code (TMC) Meldungselemente darstellen und die zumindest von zwei voneinander verschiedenen Arten sind, mit einer Angabe über ihre Art für jede dieser Daten, wobei das Verfahren folgende Schritte umfaßt:
- einen Erlangungsschritt, um Codes (TMC) zu erlangen, die jeder ein Meldungselement darstellen,
- einen Schritt zur Bildung von Meldungen,
- um auf der Basis eines ein Meldungselement darstellenden Codes (TMC) aus dem Speicher (8, 23) die betreffenden Daten zu entnehmen, die von einer Art oder einer anderen sind,
- um vor jede der Daten ein Erkennungszeichen für die entsprechende Art zu setzen, wobei das Erkennungszeichen ein Verfahren zum Erzeugen eines Analogsignals festlegt,
- und um sie zu einem Sprachsynthese-Generierungsschritt zu übertragen,
- und den Sprachsynthese-Generierungsschritt, um die entsprechenden verschiedenen Arten von Daten zu erkennen und gemäß den durch ihre jeweiligen Erkennungszeichen definierten Verfahren in Audiosignale analoger Art umzuwandeln.
